# EUROPÄISCHE PATENTSCHRIFT

(11) **EP 1 050 700 B1**
(45) Veröffentlichungstag und Bekanntmachung des Hinweises auf die Patenterteilung: **22.06.2005**
(21) Anmeldenummer: 00106192.8
(22) Anmeldetag: 22.03.2000
(51) Int. Cl.: F16J 15/32, F16J 15/16

(54) **Dichtungsanordnung**
Sealing arrangement
Dispositif d'étanchéité

(30) Priorität: 07.05.1999 DE 19921211
(43) Veröffentlichungstag der Anmeldung: 08.11.2000
(73) Patentinhaber: Carl Freudenberg KG, 69469 Weinheim (DE)
(72) Erfinder: Heinrich, Uwe, 64853 Otzberg 4 (DE); Hintenlang, Günter, 69518 Abtsteinach (DE)

(56) Entgegenhaltungen:
- EP-A- 0 446 823
- DE-A- 2 322 458
- US-A- 3 973 779
- US-A- 4 428 586

## Beschreibung

### Technisches Gebiet

Die Erfindung betrifft eine in einer Gehäusebohrung anbringbare Dichtungsanordnung für eine in dem Gehäuse gelagerte und ein Staubblech tragende Welle mit weitem Drehzahlbereich, insbesondere für Achsgetriebe.

Für die Abdichtung von Wellen wird eine Vielzahl von Dichtungen angewendet, die in erster Linie das Wellenlager oder Achsgetriebe vor Schmiermittelverlust schützen und darüber hinaus das Eindringen von Schmutzteilen in die Wellenlagerung verhindern sollen.

### Stand der Technik

Vielfach eingesetzte Dichtungsanordnungen sind Radialwellendichtungen, die in die Gehäusebohrung eingefügt werden und mit einer flexiblen Lippendichtung am Umfang der Wellen anliegen. Diese Dichtungen sind für Achsgetriebedichtungen jedoch weniger geeignet, weil sie das Eindringen von Verunreinigungen nur begrenzt verhindern. Auch die Anordnung von einer oder mehreren zusätzlichen radialen Schutzlippen ist nicht voll befriedigend.

Man ist deshalb zu sogenannten Kassettendichtungen übergegangen, bei denen auf die Welle eine Laufbüchse aufgesetzt wird, die mit einem radialen Flansch als Staubblech versehen ist. Die Primärlippendichtung, die mit der Dichtlippe an der Umfangsfläche der Laufbüchse anliegt, ist mit einer Schutzlippe versehen, die am radialen Flansch zur Anlage kommt. Die axial ausgerichtete Schutzlippe soll das Eindringen von Verunreinigungen vermeiden. Außerdem werden durch den radialen Flansch, der ein Staubblech darstellt, Schmutz, Staub und auch eingedrungenes Wasser nach außen geschleudert, sobald die Welle in Drehung versetzt wird. Allen diesen Ausführungsformen ist gemeinsam, dass die radialen oder auch axialen Schutzlippen bei hohen Umdrehungen sich stark erwärmen und einem übermäßigen Verschleiß unterworfen sind. Dadurch wird die Wirksamkeit und Lebensdauer der Dichtungen herabgesetzt.

Durch die DE 100 42 834 A1 ist eine Kassettendichtung bekannt geworden, die vorwiegend bei Geräten eingesetzt wird, die stark verschmutzt werden können, beispielsweise bei Ackerschleppern. Hier ist eine ebenfalls fest im Gehäuse eingesetzte Lippendichtung vorgesehen und zusätzlich dazu, eine mit der Welle verbundene und sich mit der Welle drehende zweite Dichtung, die hauptsächlich verhindern soll, dass Schmutzteilchen zu der aus der Dichtlippe gebildeten Hauptdichtung gelangen und diese beschädigen.

Eine verschleißarme Wellendichtung zeigt die DE 23 22 458, die sowohl bei Stillstand der Welle, beziehungsweise niedriger Wellendrehzahl als auch bei hoher Wellendrehzahl eine zuverlässige Abdichtung sichert. Dieses wird dadurch erreicht, dass die Wellendichtung zweistufig ausgebildet ist. Dabei ist eine Lippendichtung vorgesehen, die mit der Welle verbunden ist und deren Dichtlippe an einem Absatz des der Gehäusebohrung eingesetzten Deckels bei Stillstand der Welle, beziehungsweise bei niedrigen Drehzahlen anliegt. Bei höheren Drehzahlen hebt die Dichtlippe vom Absatz ab, so dass deren Dichtfunktion ausgehoben wird. Hiemach wird eine weitere Dichtung wirksam, die durch einen mit der Welle verbundenen Stützring und einem eine Erweiterung des Deckelabsatzes bildenden Kragen dadurch entsteht, das zwischen den beiden Teilen ein Dichtspalt vorhanden ist, der als Stufenlabyrinth wirksam wird. Zusätzlich zu dieser Dichtung ist die Welle noch mit einem Staubblech versehen. Bei starkem Schmutzanfall kann zwischen dem Deckel und einer an der Welle befestigten Büchse noch ein Dichtelement eingefügt werden. Eine solche Dichtung ist vom konstruktiven Aufbau sehr aufwendig und bereitet der Montage Schwierigkeiten.

Auch die US-A 3,973,779 zeigt in der Figur 4 eine zweistufig arbeitende Dichtung, bei der in ähnlicher Weise, wie voranstehend geschildert, die Lippendichtung mit der Welle verbunden ist und bei höheren Drehzahlen von ihrer Dichtfläche abhebt. Hiemach wird eine Art Labyrinthdichtung wirksam, die mit Rückfördernuten für das Öl versehen ist.

### Darstellung der Erfindung

Der Erfindung liegt die Aufgabe zugrunde, eine Dichtungsanordnung zu schaffen, die eine möglichst sichere Abdichtung ergibt und insbesondere wenig verschleißanfällig ist.

Die Lösung der gestellten Aufgabe wird mit den Merkmalen des Anspruchs 1 erreicht. Es wird eine Dichtungsanordnung gebildet, die insbesondere für Achsgetriebe vorgesehen ist. Sie kann bei Bedarf jedoch auch an anderen Stellen eingesetzt werden, sofern bei den Wellen eine Verschmutzungsgefahr bei Stillstand und im gesamten Drehzahlbereich besteht. Die Dichtungsanordung ist deshalb vor allen Dingen für Wellen mit einem weiten Drehzahlbereich geeignet. Die neue Dichtungsanordnung besteht im wesentlichen aus einer in einer Gehäusebohrung angebrachten Radialwellendichtung für die Abdichtung des Wellenlagerraums gegen Schmiermittelverlust und einem mit der Welle verbundenen Staubblech mit einer radial nach innen gerichteten

Lippendichtung, die unter Fliehkrafteinwirkung bei steigenden Drehzahlen der Welle von ihrer Dichtfläche abhebt. Die Auswahl des Materials für die Lippendichtung wird so vorgenommen, dass die Lippendichtung während des Stillstands der Welle oder auch bei relativ langsamen Umdrehungen durch ihre Eigenspannung an der ihr zugeordneten Dichtfläche dichtend anliegt. Die Lippendichtung ist mit dem Staubblech verbunden und dehnt sich bei höheren Drehzahlen aus, was zur Folge hat, dass die Dichtlippen sich von der Dichtfläche entfernen. Dadurch wird eine unnötige Reibung zwischen den Dichtlippen und der Dichtfläche vermieden und eine Erwärmung der Dichtlippen findet nicht statt.

Die Radialwellendichtung besteht in ihrem grundsätzlichen Aufbau aus einem äußeren in die Gehäusebohrung mit Preßsitz eingefügten Haftteil und einem inneren die Primärdichtlippe für die Welle tragenden Lippenteil. Das Haftteil wird bevorzugt mit einem Versteifungsring versehen, der zumindest teilweise von einer elastischen Polymerpackung ummantelt ist. Die Primärdichtlippe des Lippenteils kann von einer Drahtwendelfeder umfasst sein. Insoweit ist die Radialwellendichtung aus an sich bekannten Bauteilen zusammengesetzt.

Das mit der Dichtung zusammenwirkende Staubblech wird über eine Buchse oder dergleichen an einem Wellenabsatz befestigt. An seinem äußeren Rand hat das Staubblech eine zur Radialwellendichtung gerichteten Außenring, dessen innenliegender Rand in Zusammenwirken mit der Polymerpackung des Haftteils eine Labyrinthdichtung ergibt. Es ist günstig, wenn diese Labyrinthdichtung durch einen axial und radial ausgerichteten Spalt zwischen einer vorstehenden Ringwulst des Haftteils und einer radial nach außen gerichteten innerhalb der Ringwulst liegenden Kröpfung am innenliegenden Rand des Außenrings gebildet ist. Am Haftteil der Radialwellendichtung ist also ein nach außen vorstehender Ringwulst vorhanden, welcher das innenliegende Ende des am Staubblech befestigten Außenrings überdeckt. Zwischen Haftteil mit Ringwulst und Kröpfung des Außenrings wird folglich der Labyrinthspalt gebildet. Bevorzugt wird der Außenring des Staubblechs von einem Polymer eingefaßt, der am inneren Rand des Außenrings durch entsprechende Ausgestaltung die Kröpfung ersetzen kann.

Mit dem Polymer des Außenrings ist vorteilhaft die Lippendichtung integral verbunden. Diese Verbindung wird so ausgebildet und angeordnet, dass die Verbindung eine Schwenkbewegung (ein Abheben) der Lippendichtung ab einer vorgegebenen Wellendrehzahl zuläßt. Dieses kann beispielsweise dadurch erreicht werden, dass der Anschluß aus einer konischen Verjüngung der Lippendichtung zum Anschlußpunkt hin besteht. Prinzipiell kann der Aufbau der Lippendichtung vergleichbar zu einer üblichen Dichtlippe sein. Es ist jedoch vorteilhaft, wenn die Lippendichtung mit zwei Schutzlippen oder Dichtkanten versehen ist, um in jedem Fall das Eindringen von Schmutz insbesondere von Wasser zu verhindern.

Die Dichtfläche für die Lippendichtung wird durch eine mit dem Lippenteil der Radialwellendichtung verbundene koaxial zur Welle ausgerichtete metallische Gleithülse gebildet. Diese Gleithülse kann auf ihrer Innenfläche zumindest teilweise mit dem Polymermaterial des Lippenteils ausgekleidet sein. Es ist günstig, sie zur Verstärkung der Schmutzzurückhaltung mit zwei radialen Schutzlippen zu versehen.

Die erfindungsgemäße Dichtungsanordnung eignet sich besonders für Achsund Verteilergetriebe von sogenannten Offroad-Fahrzeugen. Durch sie wird das Eindringen von Schmutz und auch von Wasser bei Stillstand der Welle oder auch bei geringeren Drehzahlen sicher verhindert, indem die Lippendichtung das Eindringen von Wasser verhindert. Auch die Labyrinthdichtung trägt hierzu bei, indem sie den Druck des einströmenden Wassers deutlich verringert. Mit zunehmender Drehzahl der Welle kommt das Staubblech und auch die Kröpfung am Ende des Außenrings des Staubblechs immer stärker zur Wirkung bis schließlich weder Schmutz noch Flüssigkeit in das Innere der Dichtung eindringen kann. Bei steigenden Drehzahlen des Staubblechs beginnt die Lippendichtung sich aufzuweiten, beziehungsweise um ihre Anschlußstelle sich zu verdrehen, so dass die Dichtlippen von der Dichtfläche der Gleithülse abheben. Die Dichtlippen stützen sich dabei am Innendurchmesser des Außenrings ab. Die Reibung zwischen der Lippendichtung und der Gleithülse ist damit aufgehoben.

Im Rahmen des Erfindungsgedankens sind selbstverständlich weitere Ausbildungen möglich, so kann beispielsweise der Außenring des Staubblechs konisch mit nach innen zur Radialwellendichtung zunehmendem Radius ausgebildet sein. Möglich sind auch andere Ausbildungen der Lippendichtung beziehungsweise der Gleithülse.

### Kurzbeschreibung der Zeichnung

Anhand eines in der Zeichnung dargestellten Ausführungsbeispiels wird die Erfindung näher erläutert.

Es zeigt
- Figur 1: eine Dichtungsanordnung im Schnitt bei stillstehender Welle und
- Figur 2: die Dichtungsanordnung nach Figur 1 mit höherer Drehzahl der Welle.

### Ausführung der Erfindung

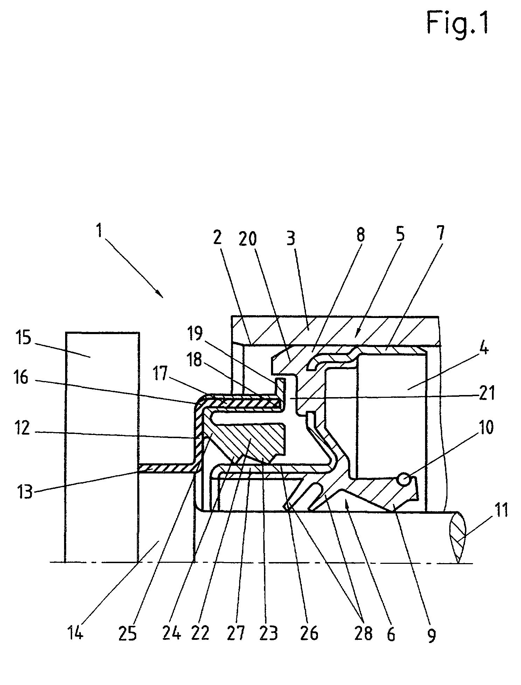

Die in der Figur 1 im Schnitt gezeigte Dichtungsanordnung 1 ist für ein nicht näher eingezeichnetes Achsgetriebe eines Offroad-Fahrzeugs vorgesehen. In die Gehäusebohrung 2 des Lagergehäuses 3 ist mit Preßsitz die Radialwellendichtung 4 eingesetzt. Die Dichtung 4 besteht im wesentlichen aus dem Haftteil 5 und dem Lippenteil 6. Das Haftteil 5 hat den Versteifungsring 7, der zumindest teilweise von der elastischen Polymerpackung 8 ummantelt ist. Der Lippenteil 6 hat die Primärdichtlippe 9, die von der Drahtwendelfeder 10 eingefaßt ist. Die Primärdichtlippe 9 liegt an der Welle 11 an.

Mit der Welle 11 ist das aus einem radialen Flansch bestehende Staubblech 12 verbunden. Hierfür hat das Staubblech 12 die Buchse 13, die auf den Wellenabsatz 14 aufgesetzt ist. An den Wellenabsatz 14 schließt die Radnabe 15 an. Das Staubblech 12 hat an seinem äußeren Rand 16 den Außenring 17, der von dem Polymer 18 eingefaßt ist. Diese Polymereinfassung 18 hat am innenliegenden Rand des Außenrings 17 einen Ringansatz 19. Dieser Ringansatz 19 wird von der Ringwulst 20 überdeckt, die von der Polymerpackung 8 des Haftteils 5 hervorsteht. Auf diese Weise entsteht zwischen der Polymerpackung 8 mit Ringwulst 20 und dem inneren Ende des Außenrings 17 mit seinem Polymer 18 und dem Ringansatz 19 ein Spalt 21, der eine Labyrinthdichtung ergibt.

An dem Staubblech 12 ist die radial nach innen gerichtete Lippendichtung 22 befestigt. Sie ist aus dem gleichen Material wie das Polymer 18 am Außenring 17 und geht in das Polymer 18 integral über. Die Lippendichtung 22 hat etwa die Form der Dichtlippe 9. Sie ist jedoch nicht mit einer Drahtwendelfeder versehen. Um eine gute Abdichtung zu erreichen, ist sie mit zwei Dichtkanten 23 und 24 versehen. Zu ihrem Anschluß 25 zum

Staubblech hin, hat die Lippendichtung 22 eine konische Verjüngung. Diese konische Verjüngung läßt eine geringfügige Verschwenkung der Lippendichtung 22 um ihren Anschluß 25 zu, wenn die Welle 11 und damit das Staubblech 12 mit einer entsprechenden Drehzahl dreht.

Die Dichtfläche 26 für die Lippendichtung 22 wird von der koaxial zur Welle 11 ausgerichteten metallischen Gleithülse 27 gebildet. Die Gleithülse 27 ist am Lippenteil 6 befestigt. Auf ihrer der Dichtfläche 26 gegenüberliegenden Innenfläche ist die Gleithülse 27 mit dem Polymer 8 des Lippenteils 6 ausgekleidet. Sie ist zusätzlich mit zwei radialen Schutzlippen 28 versehen. Diese dienen zur zusätzlichen Schmutzabweisung.

In der Figur 1 ist die Dichtungsanordnung in der Lage eingezeichnet, die sie einnimmt wenn die Welle 11 stillsteht oder nur mit geringen Drehzahlen dreht.

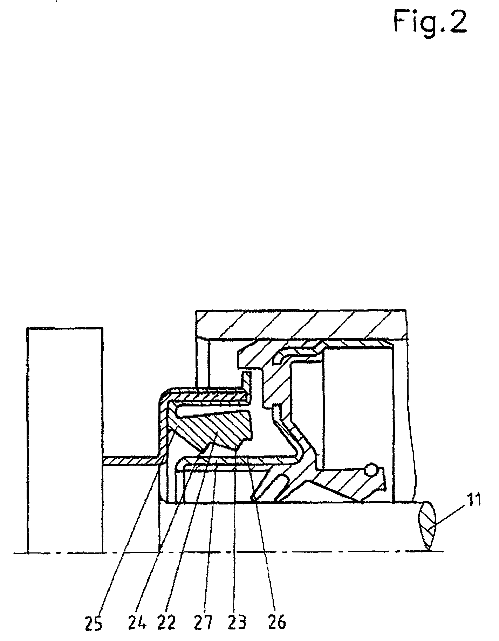

Die Figur 2 zeigt die gleiche Ausführungsform wie in Figur 1, jedoch mit der Maßgabe, dass die Welle 11 eine Drehzahl erreicht hat, bei der die Lippendichtung 22 von der Dichtfläche 26 abgehoben ist. Hierdurch ist sie leicht gegenüber der Anstoßstelle 25 verschwenkt und die Dichtlippen 23 und 24 liegen nicht mehr an der Dichtfläche 26 der Gleithülse 27 an. Die Lippendichtung 22 hat sich auch geringfügig aufgeweitet, was durch entsprechende Materialauswahl ermöglicht wird. Ab einer bestimmten Drehzahl wird die Lippendichtung 22 am Innendurchmesser des Außenrings 17 abgestützt.

In der Figur 2 sind sämtliche Teile mit den Teilen der Figur 1 identisch, so dass die Bezugszeichen aus Figur 1 bei der Figur 2 entsprechend zu übertragen sind.

## Patentansprüche

1. Dichtungsanordnung (1) für eine in einem Gehäuse gelagerte Welle (11) mit weitem Drehzahlbereich, insbesondere für Achsgetriebe, umfassend ein von der Welle zu tragendes Staubblech (12) und eine in der Gehäusebohrung (2) an zubringende Radialwellendichtung (4) zur Abdichtung des Wellenlagerraums gegen Schmiermittelverlust, mit einem äußeren in die Gehäusebohrung (2) mit Preßsitz einzufügenden Haftteil (5) und einem inneren die Primärdichtlippe (9) für die Welle (11) tragenden Lippenteil (6), **dadurch gekennzeichnet, dass** das Staubblech (12) mit einer radial nach innen gerichteten Lippendichtung (22) versehen ist, die unter Fliehkrafteinwirkung bei höheren Drehzahlen der Welle (11) von der durch eine mit dem Lippenteil (6) der Radialwellendichtung (4) verbundenen und koaxial zu Welle (11) ausgerichteten metallischen Gleithülse (27) gebildeten Dichtfläche (26) abhebt.

2. Dichtungsanordnung nach Anspruch 1, **dadurch gekennzeichnet, dass** das Haftteil (5) mit einem Versteifungsring (7) versehen ist, der zumindest teilweise von einer elastischen Polymerpackung (8) ummantelt ist.

3. Dichtungsanordnung nach einem der Ansprüche 1 oder 2, **dadurch gekennzeichnet, dass** die Primärdichtlippe (9) des Lippenteils (6) von einer Drahtwendelfeder (11) umfaßt ist.

4. Dichtungsanordung nach einem der Ansprüche 1 bis 3, **dadurch gekennzeichnet, dass** das Staubblech (12) an seinem äußeren Rand (16) einen zur Radialwellendichtung (4) gerichteten Außenring (17) hat, dessen innenliegender Rand im Zusammenwirken mit der Polymerpackung (8) des Haftteils (5) eine Labyrinthdichtung ergibt.

5. Dichtungsanordnung nach einem der Ansprüche 1 bis 4, **dadurch gekennzeichnet, dass** die Labyrinthdichtung durch einen axial und radial ausgerichteten Spalt (21) zwischen einer vorstehenden Ringwulst (20) des Haftteils (5) und einer radial nach außen gerichteten innerhalb der Ringwulst (20) liegenden Kröpfung am innenliegenden Rand des Außenrings (17) gebildet ist.

6. Dichtungsanordnung nach einem der Ansprüche 1 bis 5, **dadurch gekennzeichnet, dass** der Außenring (17) des Staubblechs (12) von einem Polymer (18) eingefaßt ist, der am innenliegenden Rand des Außenrings (17) einen die Kröpfung ersetzenden Ringansatz (19) bildet.

7. Dichtungsanordnung nach einem der Ansprüche 1 bis 6, **dadurch gekennzeichnet, dass** die Lippendichtung (22) integral mit dem Polymer (18) über einen eine Schwenkbewegung der Lippendichtung (22) ab einer vorgegebenen Wellendrehzahl zulassenden Anschluß (25) verbunden ist.

8. Dichtungsanordnung nach einem der Ansprüche 1 bis 7, **dadurch gekennzeichnet, dass** der Anschluß (25) aus einer konischen Verjüngung der Lippendichtung (22) zur Anschlußstelle hin besteht.

9. Dichtungsanordnung nach einem der Ansprüche 1 bis 8, **dadurch gekennzeichnet, dass** die Lippendichtung (22) mit zwei Schutzlippen (23, 24) versehen ist.

10. Dichtungsanordnung nach einem der Ansprüche 1 bis 9, **dadurch gekennzeichnet, dass** die Gleithülse (27) auf ihrer Innenfläche zumindest teilweise mit dem Polymer (8) des Lippenteils (6) ausgekleidet und vorzugsweise mit zwei radialen Schutzlippen (28) versehen ist.

11. Dichtungsanordnung nach einem der Ansprüche 1 bis 10, **dadurch gekennzeichnet, dass** der Außenring (17) des Staubblechs (12) konisch mit nach innen zur Radialwellendichtung (4) zunehmenden Radius ausgebildet ist.

12. Dichtungsanordnung nach einem der Ansprüche 1 bis 11, **dadurch gekennzeichnet, dass** die Dichtlippe (22) bei Erreichen einer vorgegebenen Drehzahl von der Gleithülse (27) abhebt und bei weiterer Drehzahlsteigerung am Innenumfang des Außenrings (17) sich abstützt.

## Claims

1. Sealing arrangement (1) for a shaft (11), mounted in a housing, with a wide speed range, in particular for final-drive units, comprising a dust plate (12), to be carried by the shaft, and a radial shaft seal (4), to be provided in the housing bore (2), for sealing the shaft bearing space against loss of lubricant, with an outer adhesive part (5), which is to be inserted into the housing bore (2) with a press fit, and an inner lip part (6), which bears the primary sealing lip (9) for the shaft (11), **characterized in that** the dust plate (12) is provided with a radially inwardly directed lip seal (22), which under the effect of centrifugal force at higher rotational speeds of the shaft (11), lifts off from the sealing surface (26) formed by a metallic sliding sleeve (27), which is connected to the lip part (6) of the radial shaft seal (4) and is aligned coaxially in relation to the shaft (11).

2. Sealing arrangement according to Claim 1, **characterized in that** the adhesive part (5) is provided with a stiffening ring (7), which is at least partly enclosed by an elastic polymer packing (8).

3. Sealing arrangement according to either of Claims 1 and 2, **characterized in that** the primary sealing lip (9) of the lip part (6) is clasped by a helical wire spring (10).

4. Sealing arrangement according to one of Claims 1 to 3, **characterized in that** the dust plate (12) has on its outer periphery (16) an outer ring (17), which is directed towards the radial shaft seal (4) and the inner periphery of which in cooperation with the polymer packing (8) of the adhesive part (5) produces a labyrinth seal.

5. Sealing arrangement according to one of Claims 1 to 4, **characterized in that** the labyrinth seal is formed by an axially and radially aligned gap (21) between a protruding annular bead (20) of the adhesive part (5) and a radially outwardly directed cranked offset, lying inside the annular bead (20), on the inner periphery of the outer ring (17).

6. Sealing arrangement according to one of Claims 1 to 5, **characterized in that** the outer ring (17) of the dust plate (12) is enclosed by a polymer (18), which forms on the inner periphery of the outer ring (17) an annular attachment (19) replacing the cranked offset.

7. Sealing arrangement according to one of Claims 1 to 6, **characterized in that** the lip seal (22) is integrally connected to the polymer (18) by means of a connection (25) allowing a pivoting movement of the lip seal (22) as from a predetermined shaft speed.

8. Sealing arrangement according to one of Claims 1 to 7, **characterized in that** the connection (25) comprises a conical tapering of the lip seal (22) towards the connecting point.

9. Sealing arrangement according to one of Claims 1 to 8, **characterized in that** the lip seal (22) is provided with two protective lips (23, 24).

10. Sealing arrangement according to one of Claims 1 to 9, **characterized in that** the sliding sleeve (27) is lined on its inner surface at least partly with the polymer (8) of the lip part (6) and is preferably provided with two radial protective lips (28).

11. Sealing arrangement according to one of Claims 1 to 10, **characterized in that** the outer ring (17) of the dust plate (12) is formed conically with a radius increasing inwardly towards the radial shaft seal (4).

12. Sealing arrangement according to one of Claims 1 to 11, **characterized in that** the sealing lip (22) lifts off from the sliding sleeve (27) when a predetermined speed is reached and is supported on the inner circumference of the outer ring (17) as the speed continues to increase.

## Revendications

1. Dispositif d'étanchéité (1) pour un arbre (11) monté dans un carter et ayant une large plage de vitesses de rotation, notamment pour transmissions d'essieu, comprenant une plaque anti-poussière (12) devant être portée par l'arbre et un joint d'arbre radial (4) devant être monté dans l'alésage du carter (2), pour réaliser l'étanchéité de l'espace du palier d'arbre contre toutes pertes de lubrifiant, comprenant une partie adhésive extérieure (5) devant être insérée dans l'alésage du carter (2) avec un ajustement serré et une partie de lèvre intérieure (6) portant la lèvre d'étanchéité primaire (9) pour l'arbre (11), **caractérisé en ce que** la plaque anti-poussière (12) est pourvue d'un joint à lèvre (22) orienté radialement vers l'intérieur, qui, sous l'effet de la force centrifuge à des vitesses de rotation élevées de l'arbre (11), se soulève de la surface d'étanchéité (26) formée par une gaine coulissante (27) métallique reliée à la partie de lèvre (6) du joint d'arbre radial (4) et orientée coaxialement à l'arbre (11).

2. Dispositif d'étanchéité selon la revendication 1, **caractérisé en ce que** la partie adhésive (5) est pourvue d'une bague de renforcement (7) qui est au moins en partie enveloppée par une garniture élastique polymère (8).

3. Dispositif d'étanchéité selon l'une quelconque des revendications 1 ou 2, **caractérisé en ce que** la lèvre d'étanchéité primaire (9) de la partie de lèvre (6) est entourée par un ressort spiral en fil métallique (11).

4. Dispositif d'étanchéité selon l'une quelconque des revendications 1 à 3, **caractérisé en ce que** la plaque anti-poussière (12) est pourvue sur son bord extérieur (16) d'une bague extérieure (17) orientée vers le joint d'arbre radial (4), dont le bord intérieur produit, par coopération avec la garniture polymère (8) de la partie adhésive (5), un joint à labyrinthe.

5. Dispositif d'étanchéité selon l'une quelconque des revendications 1 à 4, **caractérisé en ce que** le joint à labyrinthe est formé par une fente (21) orientée axialement et radialement entre un bourrelet annulaire saillant (20) de la partie adhésive (5) et un coude sur le bord intérieur de la bague extérieure (17), se trouvant à l'intérieur du bourrelet annulaire (20) et orienté radialement vers l'extérieur.

6. Dispositif d'étanchéité selon l'une quelconque des revendications 1 à 5, **caractérisé en ce que** la bague extérieure (17) de la plaque anti-poussière (12) est entourée par un polymère (18) qui forme sur le bord intérieur de la bague extérieure (17) une saillie annulaire (19) remplaçant le coude.

7. Dispositif d'étanchéité selon l'une quelconque des revendications 1 à 6, **caractérisé en ce que** le joint à lèvre (22) est relié intégralement au polymère (18) par le biais d'un raccord (25) autorisant un mouvement de pivotement du joint à lèvre (22) à partir d'une vitesse de rotation prédéfinie de l'arbre.

8. Dispositif d'étanchéité selon l'une quelconque des revendications 1 à 7, **caractérisé en ce que** le raccord (25) se compose d'un rétrécissement conique du joint à lèvre (22) vers le point de raccordement.

9. Dispositif d'étanchéité selon l'une quelconque des revendications 1 à 8, **caractérisé en ce que** le joint à lèvre (22) est pourvu de deux lèvres de protection (23, 24).

10. Dispositif d'étanchéité selon l'une quelconque des revendications 1 à 9, **caractérisé en ce que** la gaine coulissante (27) est revêtue sur sa surface interne au moins partiellement par le polymère (8) de la partie de lèvre (6) et est pourvue de préférence de deux lèvres de protection radiales (28).

11. Dispositif d'étanchéité selon l'une quelconque des revendications 1 à 10, **caractérisé en ce que** la bague extérieure (17) de la plaque anti-poussière (12) est réalisée sous forme conique avec un rayon croissant vers l'intérieur vers le joint d'arbre radial (4).

12. Dispositif d'étanchéité selon l'une quelconque des revendications 1 à 11, **caractérisé en ce que** la lèvre d'étanchéité (22), une fois qu'une vitesse de rotation prédéfinie a été atteinte, se soulève de la gaine coulissante (27) et s'appuie contre la périphérie interne de la bague extérieure (17) si la vitesse de rotation continue d'augmenter.
